Europäisches Patentamt

**European Patent Office**

Office européen des brevets

(19)

(11) Publication number: **0 052 445**
**A1**

(12) # EUROPEAN PATENT APPLICATION

(21) Application number: **81305076.2**

(22) Date of filing: **27.10.81**

(51) Int. Cl.³: **G 01 T 3/00**

(30) Priority: **14.11.80 US 207049**

(43) Date of publication of application:
**26.05.82 Bulletin 82/21**

(84) Designated Contracting States:
**CH DE FR GB IT LI**

(71) Applicant: **THE BABCOCK & WILCOX COMPANY**
**1010 Common Street P.O. Box 60035**
**New Orleans Louisiana 70160(US)**

(72) Inventor: **Bybee, Richard T.**
**1212 Cedar Hill Drive**
**Lynchburg Virginia 24502(US)**

(72) Inventor: **Paulson, Arnold E.**
**89 W. Princeton**
**Lynchburg Virginia 24503(US)**

(72) Inventor: **Warren, Holland D.**
**207 Nottingham Circle**
**Lynchburg Virginia 24502(US)**

(74) Representative: **Cotter, Ivan John et al,**
**D. YOUNG & CO. 10 Staple Inn**
**London WC1V 7RD(GB)**

(54) **Apparatus for detecting and measuring nuclear flux density within a nuclear reactor.**

(57) An incore neutron flux detector (12) comprises a plurality of juxtapositioned pairs of prompt responding detectors (20') and delayed response neutron detectors (20") spaced axially along the active fuel height of a nuclear reactor core. The more accurate delayed response detectors (20") are utilised to provide a generally continuous calibration of the less accurate prompt responding detectors (20') for the flux distribution at the axial position.

FIG. 3

EP 0 052 445 A1

Croydon Printing Company Ltd.

1

# APPARATUS FOR DETECTING AND MEASURING
## NUCLEAR FLUX DENSITY WITHIN A NUCLEAR REACTOR

This invention relates to apparatus for detecting and measuring nuclear flux density within a nuclear reactor.

A critical measurement involved in the operation of nuclear reactors is that of measuring in-core neutron flux density. Neutron detectors responsive to neutron flux changes are well known and broadly classified into two categories, namely 'prompt responding' and 'delayed response' types. The prompt responding detector instantaneously responds to neutron flux changes, while a detector signal of the delayed response detector reaches equilibrium at a significantly measureable time following termination of a neutron flux change. Delayed response detectors, which are more accurate than the prompt responding types, are used to provide a history of power distributions and variations during power operation modes but do not provide a fast enough signal to be used for safety functions. The less accurate prompt responding type detectors, on the other hand, must be intermittently or continuously calibrated to ensure an accurate signal. Generally, therefore, the prompt responding detectors have been used outside of the reactor to ensure accessibility for calibration. This, however, inherently leads to a less accurate determination of the incore flux.

Alternatively, in the prior art, where incore prompt responding detectors are used, such detectors are calibrated by using a movable calibration detector system. Calibration detectors remain outside the core until called upon for calibration of fixed incore detectors. The calibration detectors are then inserted by mechanical drive units into the reactor core, by way of calibration tubes of the fixed detector assemblies, and calibration of the fixed incore detectors is accomplished. However, calibration of fixed detectors using a movable calibration system has occurred at infrequent intervals because of wear-and-tear on the movable system.

A further disadvantage of prior art detectors is that less power is obtained from a given amount of nuclear reactor fuel. An increase to optimum power density in a reactor core can be achieved only if the safety system can provide instantaneous protection by responding promptly to power changes in each fuel channel. Hence, it is important that such incore detectors as are used in the sensing of core power density be capable of prompt response to changes in power density as manifested by changes in local neutron fluxes. The output signals from such detectors must necessarily represent incore flux conditions that are instantaneously current rather than flux conditions that actually existed several seconds or more in the past.

According to the present invention there is provided apparatus for detecting and measuring nuclear flux density within a nuclear reactor, characterised in that the apparatus comprises a plurality of juxtapositioned pairs of prompt responding detectors and delayed response detectors positioned within a nuclear reactor, each detector having an emitter, a sheath and an insulator interposed between the emitter and sheath whereby both detectors of each said pair substantially sense the same neutron flux field, and whereby the delayed response detector of each said pair provides a continuous calibration signal to the corresponding prompt responding detector of said pair.

The generally more accurate delayed response detectors are thus utilised to provide a generally continuous calibration of the less accurate prompt responding detectors.

A preferred embodiment of the apparatus comprises a composite incore detector assembly that has pairs of Rhodium-Hafnium detectors spaced axially along the active fuel height of a fuel assembly of the reactor. The Hafnium detector is prompt-responding and in conjunction with an online computer system can provide three-dimensional power distributions at a rate in the order of once per second. Under steady-state conditions, the Hafnium signals can easily be calibrated using the power derived from the paired Rhodium signal. The individual detectors of the assembly have, as do certain prior art detectors, an emitter, an Inconel sheath, and an insulator interposed between the emitter and sheath. Further, the detectors of the preferred detector assembly have twin leads to eliminate background noise and to increase accuracy.

The preferred detector assembly is also provided with a calibration tube to provide capability for insertion of a movable detector to obtain continuous axial traces or for intercalibration. The assembly may also contain an outlet thermocouple to measure temperature at the top of each instrumented fuel assembly. Further, to maintain the annularity of the detector assembly above those detectors whose emitters are positioned in the lower regions of the core, filler wires are provided between the outer sheath of the detector assembly and the calibration tube. The preferred neutron detector assembly thus provides a plurality of paired prompt-responding and delayed-response incore detectors for improving the measuring, calculating, and displaying of core power distributions. The output signals from a prompt response detector can be converted to core segment power and local power density values by calibrating the prompt-response detector signal to the signal from its paired delayed-response detector, which is at the same axial core height as the calibrated prompt-response detector. The preferred assembly provides reactor operators with more detailed and direct incore flux information to more quickly detect operating anomalies, and enables the elimination of excess conservatisms that necessitate operating nuclear reactors far below their actual physical limits, thus increasing their availability.

The invention will now be further described, by way of illustrative and non-limiting example, with reference to the accompanying drawings, in which:

Figure 1 is a view of a nuclear reactor incorporating flux monitoring apparatus embodying the present invention;

Figure 2 is a fragmentary view of a detector assembly of such apparatus;

Figure 3 is a transverse cross-sectional view of the detector assembly shown in Figure 2 as taken along a line 3-3 therein;

Figure 4 is a longitudinal view, partly in section, of radiation detectors of the detector assembly;

Figure 5 is a transverse cross-sectional view of the radiation detector shown in Figure 4 as taken along a line 5-5 therein; and

Figure 6 is a transverse cross-sectional view of the radiation detector shown in Figure 4 as taken along a line 6-6 therein.

A critical measurement in the opeation of nuclear reactors is that of incore neutron flux density. Heretofore, such measurements in selected core locations have been made by delayed-response detectors which have an acceptable degree of accuracy but are slow responding to changes in flux density, having a time constant in the order of one or more minutes, thus prohibiting their use in a reactor control or safety channel and limiting their use to providing a history of power distributions and variations during power operating modes.

Also available for incore neutron flux density measurement are prompt responding sensors having the necessary speed of response for use in a reactor control or safety channel but not having an acceptable degree of initial accuracy, and not possessing a predetermined functional relationship between neutron flux density and signal output. Thus, at present, their usefulness in monitoring reactor operation is limited. Typically, such prompt responding sensors have been located outside the reactor; or located incore, in which case they must be calibrated by a movable calibration detector system.

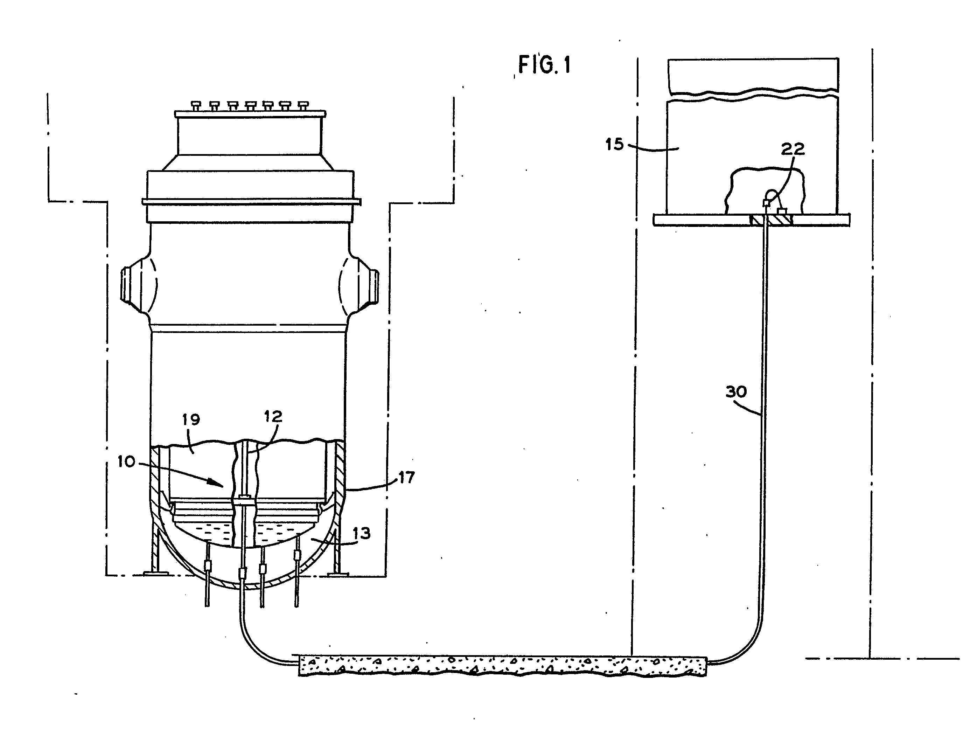

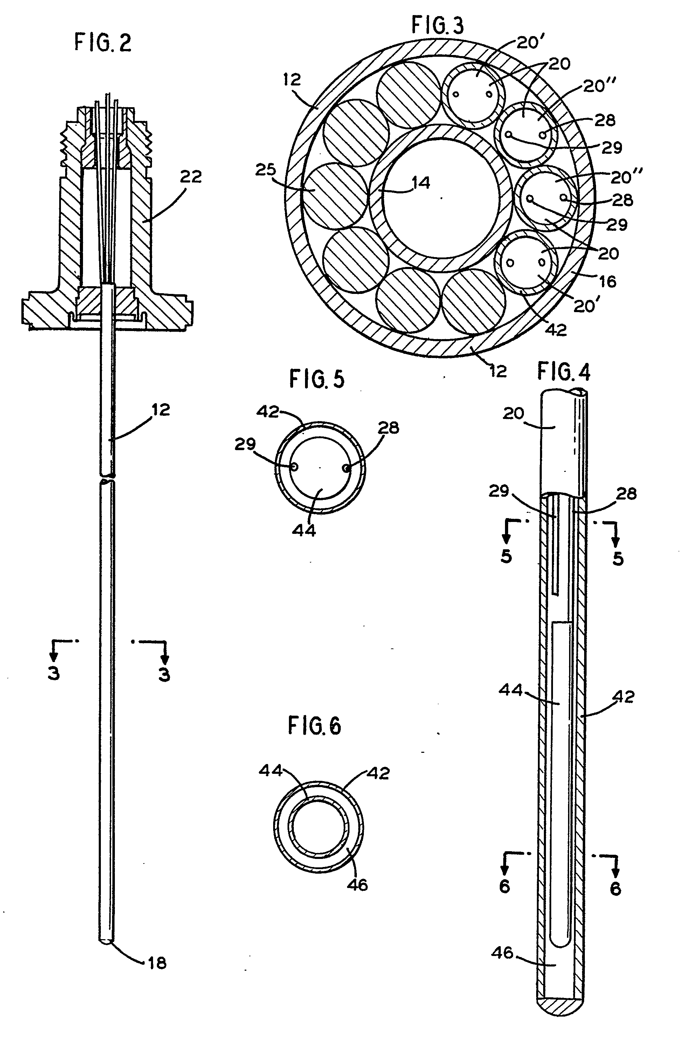

An incore flux density monitoring apparatus 10 as shown in Figure 1 continuously detects and measures core flux distribution during reactor power operation of a nuclear reactor having a core 19. The measurements are provided by composite incore detector assemblies 12 located at preselected core radial positions. Each detector assembly 12, as shown in Figures 2 and 3, contains a plurality of juxtapositioned pairs of local flux detectors 20 spaced around a calibration tube 14 and encased in an assembly oversheath 16. The oversheath 16 is sealed at the core end 18, for example by welding, and its opposite end is sealed by a high-pressure closure assembly 22. The local flux detectors 20 are positioned to measure the flux at different core axial elevations.

Each detector assembly 12 is inserted into a central instrumentation tube of a fuel assembly 17 through guide tubing 30. As shown in Figure 1, the guide tubing 30 extends from the bottom of the fuel assembly 17, through a bottom head 13 of the reactor vessel, and terminates in an incore instrument removal tank 15. The guide tubing termination and the detector assembly high-pressure closure assembly 22 form a reactor coolant system seal just above the tank floor. The guide tubing 30 is an extension of the reactor coolant system.

When the reactor system is depressurised, the detector assemblies 12 can be inserted and withdrawn through the guide tubing 30 for installation or replacement. During refuelling operations, the detector assemblies are partially withdrawn to allow shuffling of the fuel. After refuelling, the detector assemblies 12 are re-inserted into the original core radial positions and the high-pressure seals are secured.

The composite incore detector assembly 12 comprises a plurality of pairs of detectors 20 spaced axially along the active fuel height of the core 19. One detector of the pair, namely a Hafnium detector 20', is prompt-respnding and can provide prompt three-dimensional power distributions in conjunction with an on-line computer system. A slower-responding detector, namely a Rhodium detector 20", is paired with the Hafnium detector 20' to minimise required processing. Rhodium is self-powered, has only one mode of neutron activation (Rh-103 + ${}_0n^1$ + Pd-104) and depletes slowly enough so that the depletion correction can be made accurately. The Rhodium signal to power conversion is accomplished in an on-line computer (not shown). Under steady-state conditions, the signals of the Hafnium detector 20' can easily be calibrated using the power derived from the paired Rhodium detector signal.

Both detectors 20' and 20" have twin leads 28 and 29 to eliminate background effects to increase accuracy. The lead wires 28 and 29 are, for example, of Inconel. Further, as shown in Figure 3, fillers 25, generally also of Inconel, are positioned above the detectors towards the top of the core to maintain the annularity of the detector assembly 12.

Figure 4 is an expanded partial sectional view of one of the detectors 20 of the detector assembly 12 of Figure 3 and, together with Figures 5 and 6, shows a detector 20 in more detail. The detectors 20 can be seen to comprise an outer sheath 42 enclosing an emitter 44. The emitter 44 (the neutron-sensitive element of the detector) is either of Hafnium, in the core of the detectors 20' (for prompt response), or Rhodium, in the case of the detectors 20", (for delayed response). However, the Hafnium 20' detector is paired with a Rhodium detector 20" and the paired detectors are spaced axially along the active fuel height. In the embodiment shown, having five paired detectors 20' and 20", each pair is at a different core height, and although each of the five paired detectors may detect different neutron flux, each individual pair of detectors will essentially see or measure the same flux. The conductors or lead wires 28 and 29 are attached to the emitter 44, for example by crimping, and eliminate background noise. Both the lead wires 28 and 29 and the emitter 44 are surrounded by ceramic insulation 46, such as aluminium oxide, within the outer sheath 42. Incoming neutrons can pass easily through the outer sheath 42 and the insulation 46 and are absorbed by the emitter 44.

6

It will be seen from the foregoing that a detector assembly is provided in which prompt responding and delayed response self-powered detectors have been placed in the assembly in pairs with the prompt detector of the pair being continuously calibrated from the delayed detector to measure core power distribution axially along the active fuel height.

7

## CLAIMS

1. Apparatus for detecting and measuring nuclear flux density within a nuclear reactor, characterised in that the apparatus comprises a plurality of juxtapositioned pairs of prompt responding detectors (20') and delayed response detectors (20") positioned within a nuclear reactor, each detector having an emitter (44), a sheath (42) and an insulator (46) interposed between the emitter and sheath whereby both detectors of each said pair substantially sense the same neutron flux field, and whereby the delayed response detector (20") of each said pair provides a continuous calibration signal to the corresponding prompt responding detector (20') of said pair.

2. Apparatus according to claim 1, wherein the emitter (44) of the prompt responding detector (20') is made of hafnium and the emitter (40) of the delayed response detector (20") is made of rhodium.

FIG. 1

1/2

0052445

FIG. 2

FIG. 3

FIG. 5

FIG. 4

FIG. 6

## European Patent Office

## EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | FR - A - 2 358 641 (THE BABCOCK & WILCOX COMPANY) <br><br> * page 2. lines 9-14; page 3, lines 8-10; claim 8 * | 1,2 | G 01 T 3/00 |
| A | US - A - 3 603 793 (H.D. WARREN) <br><br> * claim 3 * | 2 | |

**TECHNICAL FIELDS SEARCHED (Int.Cl. 3)**

G 01 T 3/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 12-02-1982 | ARMSPACH |

EPO Form 1503.1   06.78